# EUROPEAN PATENT SPECIFICATION

(11) **EP 4 375 650 B1**
(45) Date of publication and mention of the grant of the patent: **15.04.2026**
(21) Application number: 22209194.4
(22) Date of filing: 23.11.2022
(51) Int. Cl.: G01N 23/207

(54) **A METHOD AND APPARATUS FOR OBTAINING HIGH-RESOLUTION X-RAY ANALYSIS DATA**
VERFAHREN UND VORRICHTUNG ZUR GEWINNUNG HOCHAUFLÖSENDER RÖNTGENANALYSEDATEN
PROCÉDÉ ET APPAREIL POUR OBTENIR DES DONNÉES D'ANALYSE DE RAYONS X À HAUTE RÉSOLUTION

(43) Date of publication of application: 29.05.2024
(73) Proprietor: Malvern Panalytical B.V., 7602 EA Almelo (NL)
(72) Inventor: GATESHKI, Milen, 7602 EA Almelo (NL); BECKERS, Detlef, 7602 EA Almelo (NL)
(74) Representative: Elkington and Fife LLP

(56) References cited:
- KIEFFER J. ET AL: "New tools for calibrating diffraction setups", JOURNAL OF SYNCHROTRON RADIATION, vol. 27, no. 2, 22 January 2020 (2020-01-22), pages 558 - 566, XP093037217, DOI: 10.1107/S1600577520000776
- ASHIOTIS GIANNIS ET AL: "The fast azimuthal integration Python library: pyFAI", JOURNAL OF APPLIED CRYSTALLOGRAPHY, vol. 48, no. 2, 24 March 2015 (2015-03-24), pages 510 - 519, XP093037168, DOI: 10.1107/S1600576715004306
- YANG X. ET AL: "On the estimation of statistical uncertainties on powder diffraction and small-angle scattering data from two-dimensional X-ray detectors", JOURNAL OF APPLIED CRYSTALLOGRAPHY, vol. 47, no. 4, 8 May 2014 (2014-05-08), pages 1273 - 1283, XP093037139, DOI: 10.1107/S1600576714010516

## Description

### FIELD OF THE INVENTION

The present invention relates to a computer-implemented method for processing X-ray analysis data to obtain high resolution results. Further, the present invention relates to an apparatus for carrying out such methods.

### BACKGROUND OF THE INVENTION

X-ray analysis is an analytical technique used to characterize materials in a variety of industries, including in the construction industry, mining industry, pharmaceutical industry, electronics and semiconductors industries, and the food and drink industry.

It is desirable to be able to obtain and process X-ray analysis data efficiently and in a way that facilitates accurate analysis of the results. Using a large, flat-faced X-ray detector having multiple detection channels can help to speed up the process of obtaining X-ray analysis data, compared to using a zero-dimensional X-ray detector, a small one-dimensional X-ray detector or a small two-dimensional X-ray detector. Furthermore, conducting X-ray analysis procedures using a multi-channel X-ray detector to carry out a continuous scan (in which the X-ray detector moves continuously over the range of detection angles to be analysed) can help to minimize the amount of time needed to perform the scan.

One factor underpinning accurate interpretation of X-ray analysis data obtained from an X-ray analysis procedure is resolution (e.g. the width of diffraction peaks).

It would be desirable to provide a method of analysing X-ray analysis data and an apparatus for carrying out X-ray analysis that facilitate enabling efficient and accurate analysis.

J. Kieffer et al., "New tools for calibrating diffraction setups" Journal of Synchrotron Radiation, vol. 27, 22 January 2020, pages 558-566, relates to calibration tools for processing scattering experiments.

A. Giannis et al., "The fast azimuthal integration Python library: pyFAI", Journal of Applied Crystallography, vol. 48, 24 March 2015, pages 510-519, relates to the execution speed of the pyFAI python library.

### SUMMARY OF THE INVENTION

The invention is defined by the claims.

According to examples in accordance with an aspect of the invention, there is provided a computer implemented method of X-ray analysis comprising:
receiving X-ray analysis data, from an X-ray detector comprising a plurality of detection channels, the X-ray analysis data comprising intensity angular scan data obtained by measuring X-ray intensity while continuously scanning the X-ray detector through an angular scan range of the X-ray detector;
obtaining, for each detection channel, a sequence of intensity measurements, wherein the sequence of intensity measurements forms an intensity angular scan over the angular scan range of the X-ray detector;
determining a detection angle bin size for a plurality of detection angle bins;
determining, for each detection channel, an angular offset;
for each of the plurality of detection angle bins, determining, for each detection channel, an intensity contribution factor for at least one of the intensity measurements, wherein the intensity contribution factor is determined according to an angular range associated with the detection angle bin and the angular offset of the detection channel; and
for each of the plurality of detection angle bins, determining a binned intensity based on the intensity of the at least one intensity measurement and its corresponding intensity contribution factor.

By taking the angular offset of each detection channel (also referred to herein as a detection element) into account in this way, it is possible to generate high resolution X-ray analysis data, even when using a large, flat-faced X-ray detector. The angular offset is the angle by which the detection channel is offset from a reference detection channel (in other words, the detection element is offset from a reference detection element). In use, the reference detection channel is aligned within an X-ray analysis apparatus to receive X-rays from the sample at an angle 2θ, relative to the X-ray incident of the sample. Moreover, by re-binning the intensity data in this way, the intensity datapoints are evenly spaced.

Each respective intensity measurement indicates the intensity measured by the detection channel over a respective portion of the angular scan range.

The method may comprise:
for each of the plurality of detection angle bins, selecting at least one intensity measurement associated with the detection angle bin based on an angular scan range associated with the intensity measurement and an angular range associated with the detection angle bin, wherein the intensity measurement corresponds to an angular range at least partially overlapping with the angular range of the detection angle bin.

The selected intensity measurement may comprise intensity data obtained over a portion of the angular scan range corresponding to the angular range associated with the detection angle bin.

Each intensity measurement may be associated with an angular scan range corresponding to angular range of the sampling step (the product of X-ray detector scanning speed and sampling time).

The method may comprise determining an angular scan range associated with each intensity measurement, based on the angular offset of the respective detection channel.

The computer implemented method may further comprise:
for a first detection angle bin:
selecting, for at least one sequence of intensity measurements, a first intensity measurement obtained over an angular scan range at least partially corresponding to the angular range of the at least one detection angle bin and a second intensity measurement comprising intensity data obtained over an angular range at least partially corresponding to the angular range of the at least one detection angle bin;
determining a first intensity contribution factor based on the proportion of the first intensity measurement's angular range that overlaps with the angular range of the at least one detection angle bin; and
determining a second intensity contribution factor based on the proportion of the second intensity measurement's angular range corresponding to the angular range of the at least one detection angle bin.

The first and second intensity measurement may be consecutive measurements within the sequence of intensity measurements to which they belong.

The steps may be repeated for each detection angle bin, across the fully angular range of the intensity angular scan.

The computer implemented method may further comprise determining the binned intensity of the first detection angle bin, wherein determining the binned intensity of the first detection angle bin comprises:
selecting a plurality of detection channel intensity measurements corresponding to a first detection channel;
determining, for a preceding detection channel intensity measurement of the selected detection channel intensity measurements, the first intensity contribution factor;
determining, for a succeeding detection channel intensity measurement of the selected detection channel intensity measurements, the second intensity contribution factor; and
summing the product of the intensity associated with the first detection channel intensity measurement and the first intensity contribution factor and the product of the intensity associated with the second detection channel intensity measurement and the second intensity contribution factor.

The computer implemented method may further comprise:
for each detection angle bin, selecting a plurality of intensity measurements, wherein each intensity measurement is associated with an angular scan range at least partially corresponding to the angular range of the at least one detection angle bin, and wherein at least some of the intensity measurements belong to different intensity measurement sequences;
determining, for each intensity measurement, an intensity contribution factor based on the proportion of the first intensity measurement's angular range that overlaps with the angular range of the at least one detection angle bin; and
determining a binned intensity by summing the products of the intensity associated with the respective intensity measurements and its respective intensity contribution factor.

The computer implemented method may further comprise:
receiving X-ray analysis data from an X-ray analysis apparatus configured to irradiate a sample at an incident angle, ω, and configured to detect X-rays from the sample at an angle 2θ, wherein the X-ray analysis data comprises, for each detection channel, a sequence of intensity measurements, the intensity measurements indicating intensity as a function of the angular position of the X-ray detector; and
for each detection channel other than a reference detection channel, adjusting the angular scan range, based on the angular offset between the detection channel and the reference detection channel.

The computer implemented method may further comprise:
generating an X-ray analysis scan representing binned intensity as a function of detection angle; and
outputting the X-ray analysis scan.

According to another aspect of the invention, there is provided a processor for processing X-ray analysis data from an X-ray detector comprising a plurality of detection channels, the processor configured to:
receive X-ray analysis data from the X-ray detector comprising the plurality of detection channels, the X-ray analysis data comprising intensity angular scan data obtained by measuring X-ray intensity while continuously scanning the X-ray detector through an angular scan range of the X-ray detector;
obtain, for each detection channel, a sequence of intensity measurements, wherein the sequence of intensity measurements forms an intensity angular scan over the angular scan range of the X-ray detector;
define a detection angle bin size for a plurality of detection angle bins;
determine, for each detection channel, an angular offset;
for each of the plurality of detection angle bins, determine, for each detection channel, an intensity contribution factor for at least one of the intensity measurements, wherein the intensity contribution factor is determined according to an angular range associated with the detection angle bin and the angular offset of the detection channel; and
for each of the plurality of detection angle bins, determine a binned intensity based on the intensity of the at least one intensity measurement and its corresponding intensity contribution factor.

The processor may be further configured to:
determine an angular scan range associated with each intensity measurement, based on the angular offset of the respective detection channel; and
for each of the plurality of detection angle bins, select at least one intensity measurement associated with the detection angle bin, wherein the intensity measurement corresponds to an angular range at least partially overlapping with the angular range of the detection angle bin.

The processor may be further configured to:
for a first detection angle bin:
select, for at least one sequence of intensity measurements, a first intensity measurement obtained over an angular scan range at least partially corresponding to the angular range of the at least one detection angle bin and a second intensity measurement comprising intensity data obtained over an angular range at least partially corresponding to the angular range of the at least one detection angle bin;
determine a first intensity contribution factor based on the proportion of the first intensity measurement's angular range that overlaps with the angular range of the at least one detection angle bin; and
determine a second intensity contribution factor based on the proportion of the second intensity measurement's angular range corresponding to the angular range of the at least one detection angle bin.

The processor may be further configured to determine the binned intensity of the first detection angle bin, wherein determining the binned intensity of the first detection angle bin comprises:
selecting a plurality of detection channel intensity measurements corresponding to a first detection channel;
determining, for a preceding detection channel intensity measurement of the selected detection channel intensity measurements, the first intensity contribution factor;
determining, for a succeeding detection channel intensity measurement of the selected detection channel intensity measurements, the second intensity contribution factor; and
summing the product of the intensity associated with the first detection channel intensity measurement and the first intensity contribution factor and the product of the intensity associated with the second detection channel intensity measurement and the second intensity contribution factor.

The processor may be further configured to:
for each detection angle bin, select a plurality of intensity measurements, wherein each intensity measurement is associated with angular scan range at least partially corresponding to the angular range of the at least one detection angle bin, and wherein at least some of the intensity measurements belong to different intensity measurement sequences;
determine, for each intensity measurement, an intensity contribution factor based on the proportion of the first intensity measurement's angular range that overlaps with the angular range of the at least one detection angle bin; and
determine a binned intensity by summing the products of the intensity associated with the respective intensity measurements and its respective intensity contribution factor.

The processor may be configured to:
receive X-ray analysis data from an X-ray analysis apparatus configured to irradiate a sample at an incident angle, ω , and configured to detect X-rays from the sample at an angle 2θ, wherein the X-ray analysis data comprises, for each detection channel, a sequence of intensity measurements, the intensity measurements indicating intensity as a function of the angular position of the X-ray detector; and
for each detection channel other than a reference detection channel, adjust the angular scan range, based on the angular offset between the detection channel and the reference detection channel.

According to another aspect of the invention, there is provided an X-ray analysis apparatus for analysing materials, the X-ray analysis apparatus comprising:
an X-ray source;
an X-ray detector comprising an array of detection channels; and
the above-described processor.

The apparatus may further comprise a goniometer, and the X-ray detector may be mounted to the goniometer to irradiate a sample.

The angular size of the X-ray detector may be equal to or greater than 10 degrees, wherein the angular size of the X-ray detector is the angle between the outermost detection channels as seen from the sample under analysis (which may be positioned at the center of the goniometer).

According to a further aspect of the invention, there is provided a computer program product comprising instructions which, when the program is executed by a computer, cause the computer to carry out the above-described steps.

According to another aspect of the invention, there is provided a method of carrying out X-ray analysis comprising:
continuously scanning an X-ray detector along an angular scanning path to obtain angular-intensity scan data; and
carrying out the steps of the above-described computer implemented method.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1A is a schematic diagram showing a front view of an X-ray detector comprising multiple detection channels;
Figure 1B is a schematic diagram illustrating the angular scanning paths of the X-ray detector of Figure 1A;
Figure 1C is a schematic diagram showing a front view of another X-ray detector comprising multiple detection channels;
Figure 1D is a schematic diagram illustrating the angular scanning paths of the X-ray detector of Figure 1C;
Figure 2 is a flow diagram illustrating a computer-implemented method according to one or more embodiments of the invention;
Figure 3A is a plot showing a plurality of angular X-ray intensity scans obtained by different detection channels of a multi-channel X-ray detector;
Figure 3B is another plot showing the angular X-ray intensity scan data of Figure 3A;
Figure 4 is a schematic diagram illustrating a re-binning process according to one or more embodiments of the invention;
Figure 5 shows experimental data, including a diffraction scan obtained using a method according to an embodiment of the invention and a diffraction scan obtained by a comparative method; and
Figure 6 shows an X-ray analysis apparatus according to one or more embodiments of the invention.

### DETAILED DESCRIPTION OF THE EMBODIMENTS

The invention will be described with reference to the Figures.

It should be understood that the detailed description and specific examples, while indicating exemplary embodiments of the apparatus, systems, processors and methods, are intended for purposes of illustration only and are not intended to limit the scope of the invention. These and other features, aspects, and advantages of the apparatus, systems, processors and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

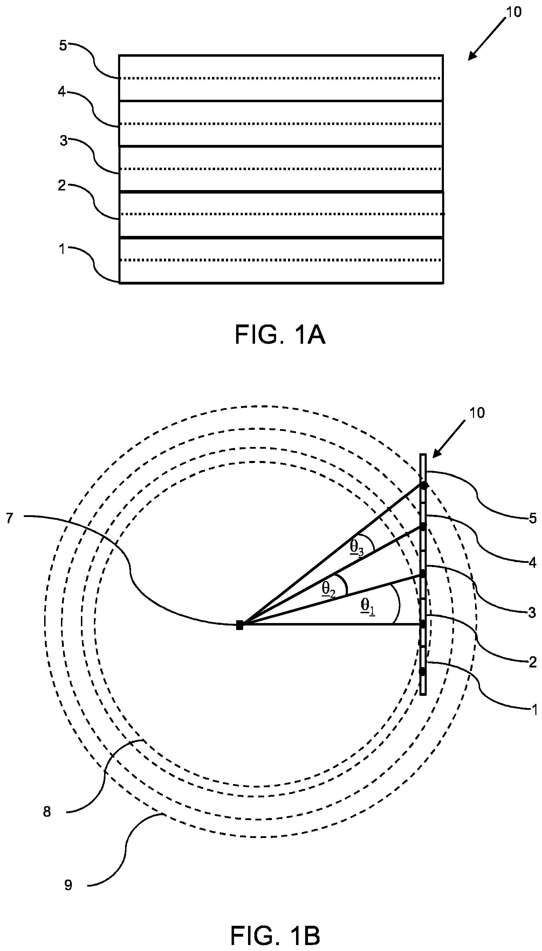

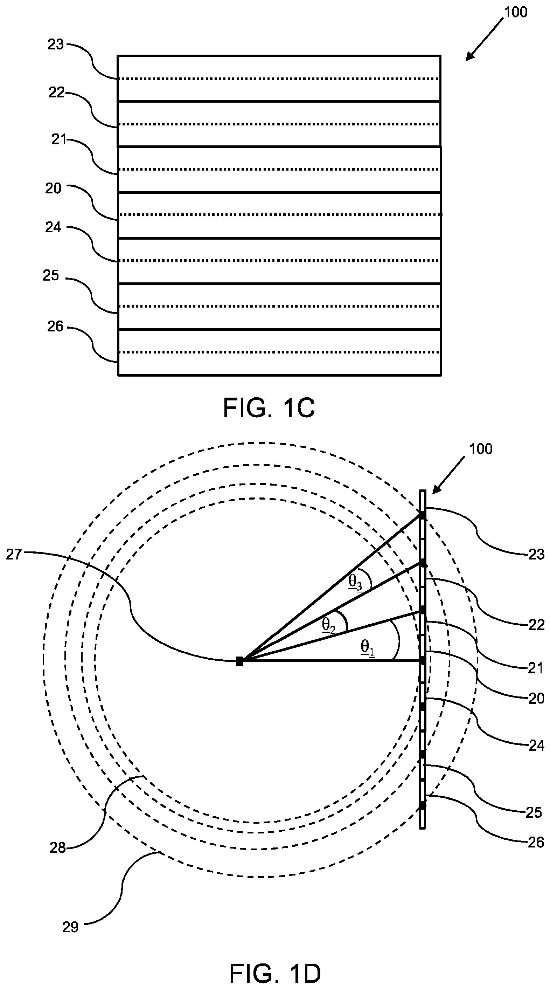

Figure 1A is a schematic diagram of a front view of an X-ray detector 10 comprising a plurality of detection elements (also referred to herein as "detection channels") 1, 2, 3, 4, 5. The detection elements are shown with the portion for receiving X-rays facing forwards. In the example illustrated in Figure 1, the X-ray detector comprises five detection elements: the first detection element 1, the second detection element 2, the third detection element 3, the fourth detection element 4 and the fifth detection element 5.

Figure 1B shows a schematic diagram of a side view of the X-ray detector 10 of Figure 1A mounted to a goniometer (not shown), for carrying out an X-ray analysis procedure. The goniometer has a detection arm, to which the X-ray detector 10 is mounted, for rotating the X-ray detector 10 relative to the centre 7 of the goniometer in order to move the X-ray detector 10 to different angular positions and thereby scan the X-ray detector through a range of detection angles.

During an X-ray analysis procedure, X-ray analysis data is collected by rotating the X-ray detector 10 through a range of detection angles, to carry out an angular scan, with the sample under analysis positioned at the center 7 of the goniometer. As illustrated in Figure 1B, the detection elements are offset from one another. Accordingly, as the X-ray detector 10 is rotated, different detection elements scan different angular paths. For example, during an angular scan, the second detection element 2 scans a portion of its corresponding detection path 8 (represented by the dashed circle having the smallest circumference), while the fifth detection element 5 scans a portion of its corresponding detection path 9 (the dashed circle having the largest circumference). The filled circles indicate the centre of the respective detection element. Note that the detection path corresponding to the first detection element 1 is the same as the detection path scanned by the third detection element 3. The detection paths corresponding to the first and third detection elements 1, 3 is not labelled with a number in the figure. Likewise, the detection path corresponding to the fourth detection element 4 is not labelled in the figure.

The X-ray detector is mounted to the goniometer such that one of the detection channels (detection elements), the "reference detection channel" ("reference detection element"), follows the angular path for which the goniometer is calibrated. That is, when the goniometer is set to an angle of e.g. 2θ = 30 degrees, the reference detection channel receives X-rays at the angular position relative to the centre of the goniometer, while the other detection channels receive X-rays offset from that angle. The reference detection channel may be the detection channel positioned at the shortest distance from the center of the goniometer e.g. in Figure 1B, the second detection channel 2 is the reference detection channel. The angular position of the reference detection channel may be used to define the angular position of the entire X-ray detector. Each detection channel can be treated as an individual point detector, obtaining a respective angular scan. As the X-ray detector is rotated through the angular scan (at a predefined speed, and with a predefined sampling time) each detection channel collects X-ray intensity data and accordingly obtains an angular intensity scan (e.g. a diffraction pattern). The X-ray intensity data collected by each detection channel may be reported at the angle of the goniometer. However, for detection channels other than the reference detection angle, the true angle is offset from the reported angle (the angle of the reference detection channel).

The angular size of a detection channel (as seen from the centre of the goniometer) depends on its position in the array of the detection elements. As illustrated in Figure 1B, angular size is smaller for detection channels towards the edges of the X-ray detector compared to detection channels positioned closer to the reference detection channel (θ₁ > θ₂ > θ₃). Accordingly, detection channels towards the edges of the X-ray detector receive a smaller proportion of the intensity of an X-ray beam incident on the X-ray detector. Furthermore, the detection channels are not equally spaced (they do not represent the same angular range interval). However, this difference in the angular size in detection channels has not previously been taken into account. Instead, the detection elements are assumed to have the same angular size. The inventors have realized that this assumption leads to an error in the position of the detection elements. Further, the angular offset, uneven spacing and variation in angular size has a significant impact on the quality of the obtained X-ray analysis results. This becomes particularly significant with increasing angular size of the X-ray detector in an X-ray analysis apparatus, wherein the angular size is given by the angle between the outermost detection elements as seen from the sample (e.g. the angle between the first and fifth detection elements). For example, the quality of X-ray analysis results may be significantly affected by these factors in arrangements in which the angular size of the X-ray detector is equal to or greater than 10 degrees.

Because the detection channels are not evenly spaced, even if their positions relative to the reference detection channel are known, it is difficult to combine data obtained from different X-ray detector positions on the angular scanning path into a single angular intensity scan. That is, it is difficult to combine the intensity data collected by the detection channels at one X-ray detector position with the intensity data collected by the detection channels at other X-ray detector positions.

According to embodiments of the invention, there is provided a computer implemented method of X-ray analysis. The method comprises receiving X-ray analysis data from an X-ray detector comprising a plurality of detection channels. The X-ray analysis data comprises intensity angular scan data obtained by measuring X-ray intensity during a continuous scan of the X-ray detector through an angular scan range of the X-ray detector. A sequence of intensity measurements is obtained for each detection channel. Each sequence of intensity measurements forms an intensity angular scan over the angular scan range of the X-ray detector. An angular offset is determined for each detection channel. The method further comprises, for each of a plurality of detection angle bins, determining, for each detection channel, an intensity contribution factor for at least one of the intensity measurements. The intensity contribution factor is determined according to an angular range associated with the detection angle bin and the angular offset of the detection channel. For each of the plurality of detection angle bins, a binned intensity is determined based on the intensity of the at least one intensity measurement and its corresponding intensity contribution factor.

Figure 1C shows a schematic diagram of another X-ray detector 100. The X-ray detector of Figure 1C also has multiple detection elements; it comprises a first detection element 20, a second detection element 21, a third detection element 22, a fourth detection element 23, a fifth detection element 24, a sixth detection element 25 and a seventh detection element 26. The first detection element 20 is the central detection element in the array of detection elements; the other detection elements are arranged symmetrically on either side of the first detection element 20.

Figure 1D shows a schematic diagram of a side view of the X-ray detector 100 of Figure 1C mounted to a goniometer (not shown), for carrying out an X-ray analysis procedure. The goniometer has a detection arm, to which the X-ray detector 100 is mounted, for rotating the X-ray detector 100 relative to the centre 27 of the goniometer in order to move the X-ray detector 100 to different angular positions and thereby scan the X-ray detector through a range of detection angles. X-ray analysis is conducted in the same way as described in connection with Figure 1B. X-ray analysis data is collected by rotating the X-ray detector 100 through a range of detection angles, to carry out an angular scan, with the sample under analysis positioned at the center 27 of the goniometer. As the X-ray detector 100 is rotated, different detection elements scan different angular paths. For example, during an angular scan, the first detection element 20 scans a portion of its corresponding detection path 28 (represented by the dashed circle having the smallest circumference), while the fourth detection element 23 scans a portion of its corresponding detection path 29 (the dashed circle having the largest circumference). Note that, due to the symmetric arrangement of detection elements about the central detection element, the detection path corresponding to the second detection element 21 is the same as the detection path corresponding to the fifth detection element 24, the detection path corresponding to the third detection element 22 is the same as the detection path corresponding to the sixth detection element 25 and the detection path corresponding to the fourth detection element 23 is the same as the detection path corresponding to the seventh detection element 26. The detection path corresponding to the third detection element 22 and the sixth detection element 25 is not labelled in the figure. Likewise, the detection path corresponding to the second detection element 21 and the fifth detection element 24 is not labelled in the figure.

In this example, the first detection element 20, which is the central detection element, is used as the reference detection element.

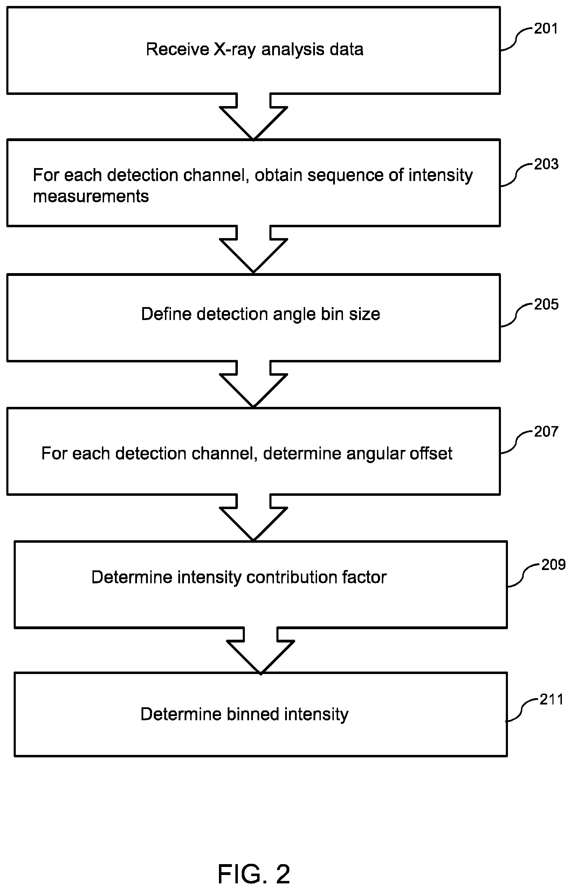

Figure 2 illustrates the steps of a computer implemented method according to embodiments of the invention. In a receiving step 201, the computer receives X-ray analysis data obtained by continuously scanning an X-ray detector comprising multiple detection channels through a range of detection angles. The X-ray analysis data is processed, 203, to obtain a sequence of intensity measurements for each detection channel. During the angular scan, the X-ray detector moves through the scan path at a predefined speed and obtains intensity measurements over a predefined sampling time. Accordingly, each data point in the sequence of intensity measurements corresponds to a respective sampling step associated with an angular range determined by the predefined speed and the predefined sampling time. Each sequence of intensity measurements is an angular X-ray intensity scan (e.g. a diffraction pattern) corresponding to the detection channel that measured the intensity data.

Next, the X-ray analysis data is re-binned, thereby redistributing X-ray intensity. A detection angle bin size is determined 205. The intensity data obtained from each detection channel is then re-binned across a plurality of detection angle bins (each detection angle bin having the determined detection angle bin size). The re-binning process will now be described in further detail.

Each data point in the sequence of intensity measurements corresponding to a given detection channel is assessed to determine 1) which detection angle bin(s) the detection angle associated with the data point is associated with and 2) what proportion of the intensity associated with the data point should be assigned to the detection angle bin.

Determining which detection angle bin(s) the data point is associated with is carried out taking into account the angular offset associated with the relevant detection channel 207.

Determining what proportion of the intensity associated with the data point should be assigned to the detection angle bin comprises determining an intensity contribution factor. The intensity contribution factor is calculated 209 taking into account the angular offset of the detection channels and the angular range of the detection angle bin. Where the data point corresponds to a single detection angle bin, the intensity contribution factor is determined such that the entire intensity is allocated to that detection angle bin. Where the data point corresponds to multiple detections bins (i.e. where the data point corresponds to two adjacent detection bins) the intensity contribution factor splits the intensity associated with the data point between the detection bins.

The method further comprises, for each of the plurality of detection angle bins, determining a binned intensity 211 based on the intensity of the at least one intensity measurement and its corresponding intensity contribution factor.

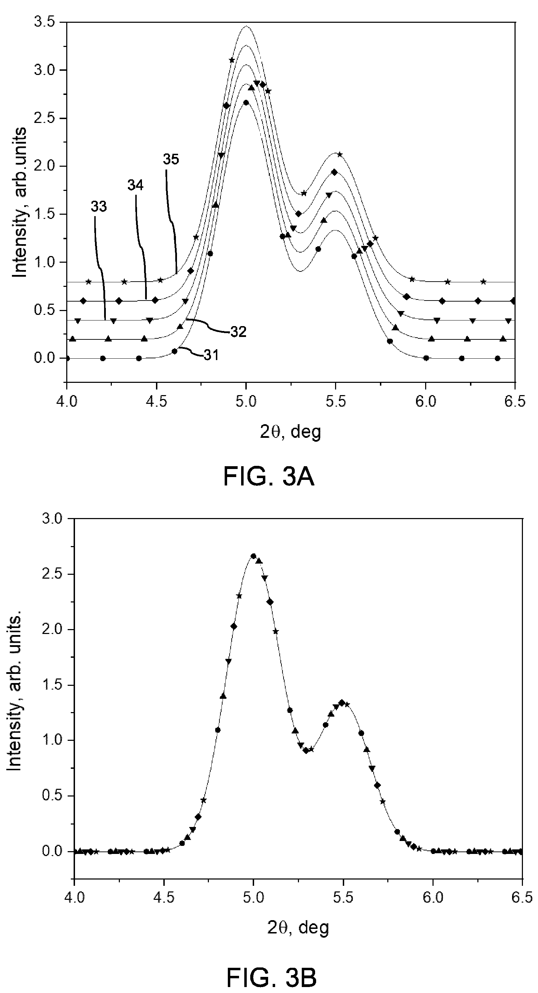

Figure 3A shows a plurality of angular intensity curves, each intensity curve corresponding to a different X-ray detection channel. Note that the data for the X-ray detection channels is shifted vertically, to allow for clear viewing of data obtained from different X-ray detection channels. Each group of datapoints (e.g. the group of first data points in each sequence, the group of second datapoints etc.) corresponds to a respective sampling step. The angular offset between detection channels has been taken into account. It can be seen that the different channels measure the same signal, at different detection angles (according to the angular offset). The first curve 31 corresponds to the first detection channel, the second curve 32 corresponds to the second detection channel, the third curve 33 corresponds to the third detection channel, the fourth curve 34 corresponds to the fourth detection channel and the fifth curve 35 corresponds to the fifth detection channel.

Figure 3B shows the angular X-ray intensity scan data of Figure 3A. In Figure 3B, the intensity data has not been shifted, so that all of the datapoints form part of the same curve.

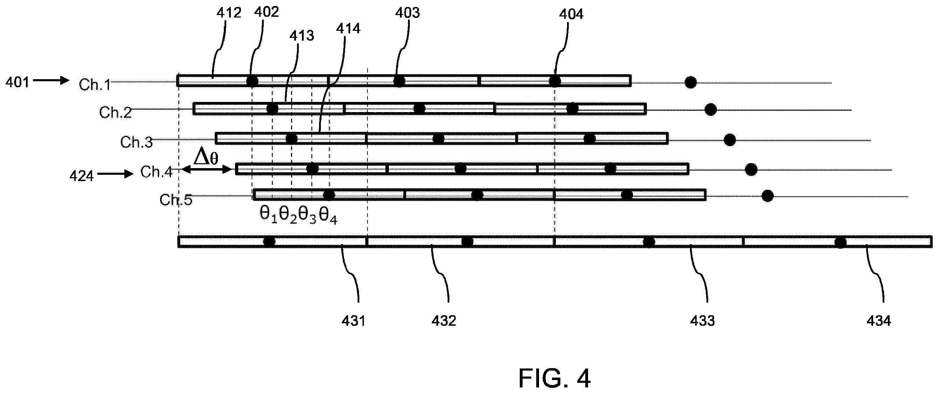

Figure 4 shows a schematic diagram illustrating a re-binning process according to an embodiment of the invention. Figure 4 is described with reference to a X-ray detector comprising five detection channels. However, it will be appreciated that any number of detection channels could be used.

As illustrated in Figure 4, each detection channel obtains X-ray intensity data in a sequence of sampling steps. Because the X-ray detector collects the X-ray analysis data over a continuous scan (i.e. the X-ray detector moves continuously, rather than in discrete steps), the X-ray analysis data is collected over an angular range that does not coincide with the size of the detection channels (in contrast to a step-scan). Instead, the size of the sampling step is determined by the scanning speed of the X-ray detector and the sampling time, both of which are pre-determined scan parameters. As shown in Figure 4, X-ray analysis data obtained by the first channel 401 comprises a first intensity measurement 402, a second intensity measurement 403 and a third intensity measurement 404, each intensity measurement corresponding to a respective sampling step. The intensity measurement (i.e. the intensity measured during the sampling step) is positioned in the center of the sampling step. Note that the X-ray data obtained from the different detection channels is offset, according to the angular offset between the detection channels. For example, the angular offset between the first detection channel 401 and the fourth detection channel 424 is given by Δθ.

The X-ray analysis data is processed to re-bin the X-ray analysis data into a plurality of detection angle bins 431, 432, 433, 434. It is first necessary to determine (choose) a detection angle bin size: the size of the detection angle bin may be different to the size of the sampling step, or it can be equal to the sampling step size. Next, the intensity data is re-distributed among the detection angle bins. For sampling steps that fall entirely within the angular range of the detection angle bin, the respective intensity measurement is assigned to that detection angle bin (e.g. the first sampling step for the first, second and third detection channels 412, 413, 414 fall entirely within the range of the first detection angle bin 431). For sampling steps that bridge multiple detection angle bins (e.g. the sampling steps corresponding to the fourth channel and fifth channel bridge the first detection angle bin 431 and the second detection angle bin 432). For these sampling steps, a proportion of the first intensity measurement value is assigned to the first detection angle bin 431 the rest is assigned to the second detection angle bin 432. The proportion to be assigned is determined by calculating an intensity contribution factor. The intensity contribution factor reflects the proportion of the angular range associated with the respective sampling step that overlaps the relevant detection angle bin. For example, if 80% of the first sampling step of the fourth channel 424 overlaps the first detection angle bin 431 and 20 % of the first sampling step of the fourth channel overlaps the second detection angle bin 432, 80% of the value of the first intensity measurement for the fourth detection channel is assigned to the first detection angle bin and 20% is assigned to the second detection angle bin. Further, if 60% of the first sampling step of the fifth channel overlaps the first detection angle bin 431 and 40 % of the first sampling step of the fifth channel overlaps the second detection angle bin 432, 60% of the value of the first intensity measurement for the fifth detection channel is assigned to the first detection angle bin and 40% is assigned to the second detection angle bin 432. In this way, the intensity contribution factor is based on the angular offset between the detection channels, and the angular range associated with the detection angle bin.

Once the intensity contribution from each detection channel to a detection angle bin has been determined, the intensity contributions are summed to determine the total binned intensity for the respective detection angle bin. The total binned intensity value is assigned to the center of the respective detection angle bin. For example, if the detection angle bin size is 0.05 degrees 20 and is located between 10.0 degrees 2θ and 10.05 degrees 2θ, the center of this detection angle bin is at 10.025 degrees (mid-way between the beginning and the end of the detection angle bin).

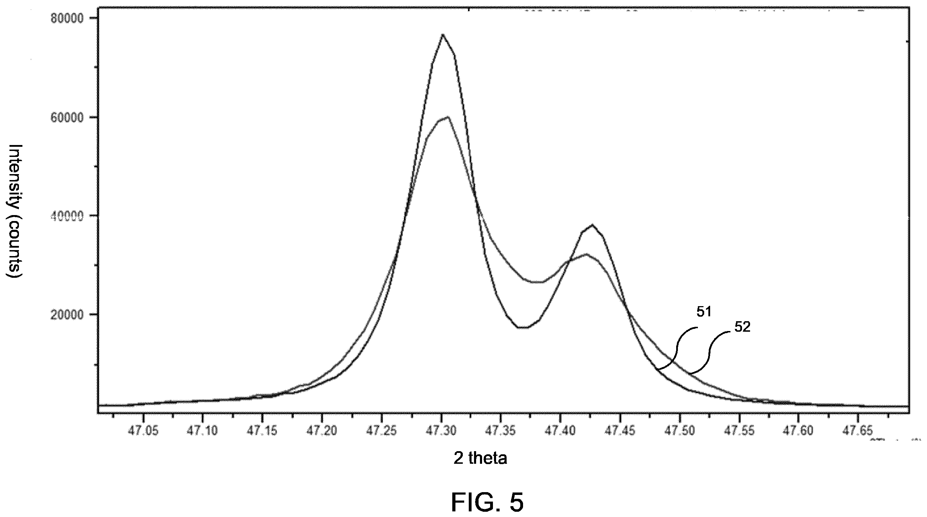

Figure 5 shows experimental data demonstrating how methods according to embodiments of the invention can achieve high quality results. The first signal 51 represents X-ray analysis data in which angular offset between detection channels has been taken into account according to embodiments of the invention. The second signal 52 represents X-ray analysis data that has been processed according to a comparative algorithm that assumes equal angular distance between the detector channels. As shown in Figure 5, the first signal 51 has better peak resolution than the second signal 52.

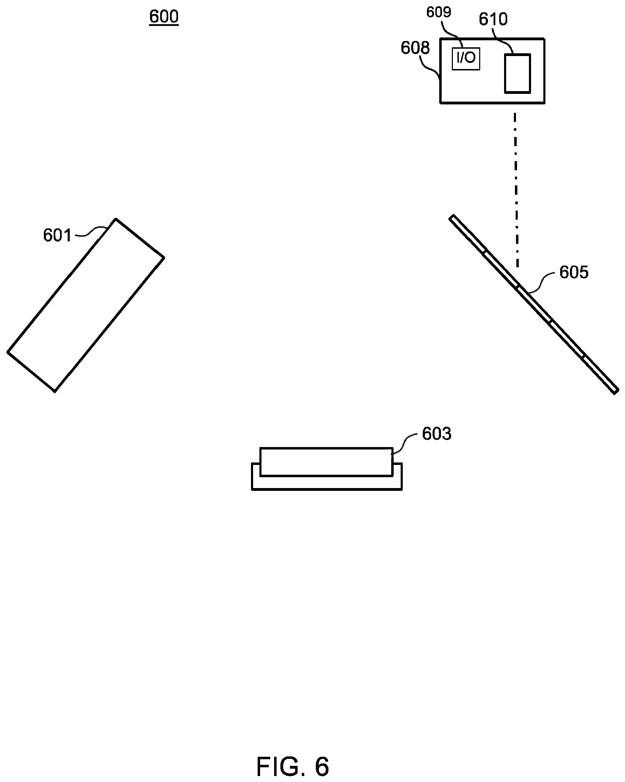

Figure 6 shows an X-ray analysis apparatus 600 according to an embodiment of the invention. The X-ray analysis apparatus comprise an X-ray source 601 for irradiating a sample 603 with X-rays, and an X-ray detector 605 for receiving X-rays from the sample. The X-ray detector has the same structure as that described in relation to Figures 1A and 1C (i.e. it has multiple detection channels). The X-ray detector 605 is communicatively coupled with a computing device 608. The computing device 608 is configured to receive X-ray analysis data from the X-ray detector 605, and to process the X-ray analysis data to produce an X-ray analysis scan. In embodiments, the processor 610 is configured to carry out the steps of the method shown in Figure 2.

The processor 610 is configured to receive X-ray analysis data obtained by continuously scanning the X-ray detector 605 through a range of detection angles. The processor 610 processes the X-ray analysis data to obtain a sequence of intensity measurements for each detection channel of the X-ray detector 605. During the angular scan, the X-ray detector moves through the scan path at a predefined speed and with a predefined sampling time. Accordingly, each data point in the sequence of intensity measurements corresponds to a respective sampling step associated with an angular range determined by the predefined speed and the predefined sampling time. Each sequence of intensity measurements is an angular X-ray intensity scan (e.g. a diffraction pattern) corresponding to the detection channel that measured the intensity data.

Next, the processor 610 re-bins the X-ray analysis data to redistribute X-ray intensity. In some embodiments, the processor determines a detection angle bin size. In some embodiments, determining a detection angle bin size comprises receiving a detection angle bin size through a user input 609 of the computer 608. The intensity data obtained from each detection channel is then re-binned, by the processor 610, across a plurality of detection angle bins (each detection angle bin having the determined detection angle bin size).

Each data point in the sequence of intensity measurements corresponding to a given detection channel is assessed to determine 1) which detection angle bin(s) the detection angle associated with the data point is associated with and 2) what proportion of the intensity associated with the data point should be assigned to the detection angle bin.

The processor determines which detection angle bin(s) the data point is associated with is carried out taking into account the angular offset associated with the relevant detection channel.

The processor is configured to determine what proportion of the intensity associated with the data point should be assigned to the detection angle bin, including determining an intensity contribution factor. The intensity contribution factor is calculated taking into account the angular offset between detection channels and the angular range of the detection angle bin. Where the data point corresponds to a single detection angle bin, the intensity contribution factor is determined such that the entire intensity is allocated to that detection angle bin. Where the data point corresponds to multiple detections bins (i.e. where the data point corresponds to two adjacent detection bins) the intensity contribution factor splits the intensity associated with the data point between the detection bins.

Further, the processor determines - for each of the plurality of detection angle bins - a binned intensity based on the intensity of the at least one intensity measurement and its corresponding intensity contribution factor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It will be understood that the terms "detection element" and "detection channel" are used interchangeably.

It will be understood that the terms "reference detection element" and "reference detection channel" are used interchangeably.

It will be appreciated that, in general, a method according to embodiments of the invention can be applied either in real time (during the execution of the measurement) or in post-processing (by analyzing all frames measured by the detector after the data collection is finished). Each frame is a set of detection channel measurements obtained by the X-ray detector at a particular stage of the angular scan (i.e. at a particular angular position of the X-ray detector).

It will be appreciated with the angle of incidence, ω, of the X-ray beam irradiating the sample can be either constant during the measurement or variable, depending on the type of measurement. It should be understood that methods according to embodiments of the invention can be applied in either case.

Although the Figures illustrate an X-ray detector comprising five detection elements (detection channels), it will be appreciated that the X-ray detector may comprise any number of detection elements. The X-ray detector is a flat-faced X-ray detector.

It will be appreciated that methods according to embodiments of the invention can be applied to scanning measurements carried out with one-dimensional X-ray detectors and two-dimensional X-ray detectors (including measurements carried out with two-dimensional X-ray detectors operated in a one-dimensional mode).

It will be appreciated that, in some embodiments, the steps of the method illustrated in Figure 2 can be carried out in a different order. For example, the step of determining bin size may be carried out at the start of the method or at any point prior to the re-binning of X-ray intensity data.

The angular range (bin size) of the plurality of bins can be the same or different to the angular range according to the pre-defined scanning speed and sampling time.

The angular size of an X-ray detector depends on the linear size of the X-ray detector and the distance from the sample to the X-ray detector. An X-ray detector with a small linear size located close to the sample may have a larger angular size than an X-ray detector with a large linear size positioned further away from the sample.

It will be appreciated that, in embodiments, any of the detection elements can be used as the reference detection element. In some embodiments, the X-ray detector is positioned such that the reference detection element is central to the X-ray detector's array of detection elements (i.e., the detection elements other than the reference detection element are arranged symmetric around the reference detection element). In some other embodiments, the X-ray detector is positioned such that the reference detection element is not central in the array of detection elements.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A computer implemented method of X-ray analysis comprising:
receiving X-ray analysis data (201), from an X-ray detector (10) comprising a plurality of detection channels (1, 2, 3, 4, 5);
obtaining (203), for each detection channel, a sequence of intensity measurements, wherein the sequence of intensity measurements forms an intensity angular scan over an angular scan range of the X-ray detector;
determining (205) a detection angle bin size for a plurality of detection angle bins;
for each of the plurality of detection angle bins, determining (209), for each detection channel, an intensity contribution factor for at least one of the intensity measurements; and
for each of the plurality of detection angle bins, determining (211) a binned intensity based on the intensity of the at least one intensity measurement and its corresponding intensity contribution factor,
**characterized in that**:
the X-ray analysis data comprises intensity angular scan data obtained by measuring X-ray intensity while continuously scanning the X-ray detector through the angular scan range of the X-ray detector;
the method further comprising determining (207), for each detection channel, an angular offset; and
wherein the intensity contribution factor is determined according to an angular range associated with the detection angle bin and the angular offset of the detection channel.

2. The computer implemented method of claim 1 wherein the method comprises:
for each of the plurality of detection angle bins, selecting at least one intensity measurement associated with the detection angle bin based on an angular scan range associated with the intensity measurement and an angular range associated with the detection angle bin, wherein the intensity measurement corresponds to an angular range at least partially overlapping with the angular range of the detection angle bin.

3. The computer implemented method of claim 2 further comprising:
for a first detection angle bin:
selecting, for at least one sequence of intensity measurements, a first intensity measurement obtained over an angular scan range at least partially corresponding to the angular range of the at least one detection angle bin and a second intensity measurement comprising intensity data obtained over an angular range at least partially corresponding to the angular range of the at least one detection angle bin;
determining a first intensity contribution factor based on the proportion of the first intensity measurement's angular range that overlaps with the angular range of the at least one detection angle bin; and
determining a second intensity contribution factor based on the proportion of the second intensity measurement's angular range corresponding to the angular range of the at least one detection angle bin.

4. The computer implemented method of claim 3 further comprising determining the binned intensity of the first detection angle bin, wherein determining the binned intensity of the first detection angle bin comprises:
selecting a plurality of detection channel intensity measurements corresponding to a first detection channel;
determining, for a preceding detection channel intensity measurement of the selected detection channel intensity measurements, the first intensity contribution factor;
determining, for a succeeding detection channel intensity measurement of the selected detection channel intensity measurements, the second intensity contribution factor; and
summing the product of the intensity associated with the first detection channel intensity measurement and the first intensity contribution factor and the product of the intensity associated with the second detection channel intensity measurement and the second intensity contribution factor.

5. The computer implemented method of claim 4 further comprising:
for each detection angle bin, selecting a plurality of intensity measurements, wherein each intensity measurement is associated with an angular scan range at least partially corresponding to the angular range of the at least one detection angle bin, and wherein at least some of the intensity measurements belong to different intensity measurement sequences;
determining, for each intensity measurement, an intensity contribution factor based on the proportion of the first intensity measurement's angular range that overlaps with the angular range of the at least one detection angle bin; and
determining a binned intensity by summing the products of the intensity associated with the respective intensity measurements and its respective intensity contribution factor.

6. The computer implemented method of any preceding claim, the method further comprising:
receiving X-ray analysis data from an X-ray analysis apparatus configured to irradiate a sample at an incident angle, ω, and configured to detect X-rays from the sample at an angle 2θ, wherein the X-ray analysis data comprises, for each detection channel, a sequence of intensity measurements, the intensity measurements indicating intensity as a function of the angular position of the X-ray detector; and
for each detection channel other than a reference detection channel, adjusting the angular scan range, based on the angular offset between the detection channel and the reference detection channel.

7. The computer implemented method of any preceding claim further comprising:
generating an X-ray analysis scan representing binned intensity as a function of detection angle; and
outputting the X-ray analysis scan.

8. A processor for processing X-ray analysis data from an X-ray detector comprising a plurality of detection channels, the processor configured to:
receive X-ray analysis data from the X-ray detector comprising the plurality of detection channels;
obtain, for each detection channel, a sequence of intensity measurements, wherein the sequence of intensity measurements forms an intensity angular scan over an angular scan range of the X-ray detector;
define a detection angle bin size for a plurality of detection angle bins;
for each of the plurality of detection angle bins, determine, for each detection channel, an intensity contribution factor for at least one of the intensity measurements; and
for each of the plurality of detection angle bins, determine a binned intensity based on the intensity of the at least one intensity measurement and its corresponding intensity contribution factor,
**characterized in that**:
the processor is further configured to determine, for each detection channel, an angular offset;
the X-ray analysis data comprises intensity angular scan data obtained by measuring X-ray intensity while continuously scanning the X-ray detector through the angular scan range of the X-ray detector; and
the intensity contribution factor is determined according to an angular range associated with the detection angle bin and the angular offset of the detection channel.

9. The processor of claim 8 further configured to:
determine an angular scan range associated with each intensity measurement, based on the angular offset of the respective detection channel; and
for each of the plurality of detection angle bins, select at least one intensity measurement associated with the detection angle bin, wherein the intensity measurement corresponds to an angular range at least partially overlapping with the angular range of the detection angle bin.

10. The processor of claim 9 further configured to:
for a first detection angle bin:
select, for at least one sequence of intensity measurements, a first intensity measurement obtained over an angular scan range at least partially corresponding to the angular range of the at least one detection angle bin and a second intensity measurement comprising intensity data obtained over an angular range at least partially corresponding to the angular range of the at least one detection angle bin;
determine a first intensity contribution factor based on the proportion of the first intensity measurement's angular range that overlaps with the angular range of the at least one detection angle bin; and
determine a second intensity contribution factor based on the proportion of the second intensity measurement's angular range corresponding to the angular range of the at least one detection angle bin.

11. The processor of claim 10 further configured to determine the binned intensity of the first detection angle bin, wherein determining the binned intensity of the first detection angle bin comprises:
selecting a plurality of detection channel intensity measurements corresponding to a first detection channel;
determining, for a preceding detection channel intensity measurement of the selected detection channel intensity measurements, the first intensity contribution factor;
determining, for a succeeding detection channel intensity measurement of the selected detection channel intensity measurements, the second intensity contribution factor; and
summing the product of the intensity associated with the first detection channel intensity measurement and the first intensity contribution factor and the product of the intensity associated with the second detection channel intensity measurement and the second intensity contribution factor.

12. The processor of any of claims 9 to 11, wherein the processor is further configured to:
for each detection angle bin, select a plurality of intensity measurements, wherein each intensity measurement is associated with an angular scan range at least partially corresponding to the angular range of the at least one detection angle bin, and wherein at least some of the intensity measurements belong to different intensity measurement sequences;
determine, for each intensity measurement, an intensity contribution factor based on the proportion of the first intensity measurement's angular range that overlaps with the angular range of the at least one detection angle bin; and
determine a binned intensity by summing the products of the intensity associated with the respective intensity measurements and its respective intensity contribution factor.

13. The processor of any of claims 8 to 12 wherein the processor is configured to:
receive X-ray analysis data from an X-ray analysis apparatus configured to irradiate a sample at an incident angle, ω, and configured to detect X-rays from the sample at an angle 2θ, wherein the X-ray analysis data comprises, for each detection channel, a sequence of intensity measurements, the intensity measurements indicating intensity as a function of the angular position of the X-ray detector; and
for each detection channel other than a reference detection channel, adjust the angular scan range, based on the angular offset between the detection channel and the reference detection channel.

14. An X-ray analysis apparatus for analysing materials, the X-ray analysis apparatus comprising:
an X-ray source (601);
an X-ray detector (605) comprising an array of detection channels; and
the processor (610) of any of claims 8 to 13.

15. A computer program product comprising instructions which, when the program is executed by a computer, cause the computer to carry out the steps of any of claims 1-7.

## Patentansprüche

1. Computerimplementiertes Verfahren zur Röntgenanalyse, umfassend:
Empfangen von Röntgenanalysedaten (201) von einem Röntgendetektor (10), der eine Vielzahl von Detektionskanälen (1, 2, 3, 4, 5) umfasst;
Gewinnen (203), für jeden Detektionskanal, einer Sequenz von Intensitätsmessungen, wobei die Sequenz von Intensitätsmessungen eine Intensitätswinkelabtastung über einen Winkelabtastbereich des Röntgendetektors bildet;
Bestimmen (205) einer Detektionswinkelbingröße für eine Vielzahl von Detektionswinkelbins;
für jeden aus der Vielzahl von Detektionswinkelbins, Bestimmen (209), für jeden Detektionskanal, eines Intensitätsbeitragsfaktors für zumindest eine der Intensitätsmessungen; und
für jeden aus der Vielzahl von Detektionswinkelbins, Bestimmen (211) einer gebinnten Intensität basierend auf der Intensität der zumindest einen Intensitätsmessung und ihrem entsprechenden Intensitätsbeitragsfaktor,
**dadurch gekennzeichnet, dass**:
die Röntgenanalysedaten Intensitätswinkelabtastdaten umfassen, die durch Messen der Röntgenintensität gewonnen werden, während der Röntgendetektor kontinuierlich durch den Winkelabtastbereich des Röntgendetektors abgetastet wird;
wobei das Verfahren ferner Bestimmen (207), für jeden Detektionskanal, eines Winkelversatzes umfasst; und
wobei der Intensitätsbeitragsfaktor gemäß einem Winkelbereich assoziiert mit dem Detektionswinkelbin und dem Winkelversatz des Detektionskanals bestimmt wird.

2. Computerimplementiertes Verfahren nach Anspruch 1, wobei das Verfahren Folgendes umfasst:
für jeden aus der Vielzahl von Detektionswinkelbins, Auswählen von zumindest einer Intensitätsmessung assoziiert mit dem Detektionswinkelbin basierend auf einem Winkelabtastbereich assoziiert mit der Intensitätsmessung und einem Winkelbereich assoziiert mit dem Detektionswinkelbin, wobei die Intensitätsmessung einem Winkelbereich entspricht, der zumindest teilweise mit dem Winkelbereich des Detektionswinkelbins überlappt.

3. Computerimplementiertes Verfahren nach Anspruch 2, ferner umfassend:
für einen ersten Detektionswinkelbin:
Auswählen, für zumindest eine Sequenz von Intensitätsmessungen, einer ersten Intensitätsmessung, die über einen Winkelabtastbereich gewonnen wird, der dem Winkelbereich des zumindest einen Detektionswinkelbins zumindest teilweise entspricht, und einer zweiten Intensitätsmessung, die Intensitätsdaten umfasst, die über einen Winkelbereich gewonnen werden, der dem Winkelbereich des zumindest einen Detektionswinkelbins zumindest teilweise entspricht;
Bestimmen eines ersten Intensitätsbeitragsfaktors basierend auf dem Anteil des Winkelbereichs der ersten Intensitätsmessung, der mit dem Winkelbereich des zumindest einen Detektionswinkelbins überlappt; und
Bestimmen eines zweiten Intensitätsbeitragsfaktors basierend auf dem Anteil des Winkelbereichs der zweiten Intensitätsmessung, der dem Winkelbereich des zumindest einen Detektionswinkelbins entspricht.

4. Computerimplementiertes Verfahren nach Anspruch 3, ferner umfassend Bestimmen der gebinnten Intensität des ersten Detektionswinkelbins, wobei das Bestimmen der gebinnten Intensität des ersten Detektionswinkelbins Folgendes umfasst:
Auswählen einer Vielzahl von Detektionskanalintensitätsmessungen, die einem ersten Detektionskanal entspricht;
Bestimmen, für eine vorangehende Detektionskanalintensitätsmessung der ausgewählten Detektionskanalintensitätsmessungen, des ersten Intensitätsbeitragsfaktors;
Bestimmen, für eine nachfolgende Detektionskanalintensitätsmessung der ausgewählten Detektionskanalintensitätsmessungen, des zweiten Intensitätsbeitragsfaktors; und
Summieren des Produkts der Intensität assoziiert mit der ersten Detektionskanalintensitätsmessung und des ersten Intensitätsbeitragsfaktors und des Produkts der Intensität assoziiert mit der zweiten Detektionskanalintensitätsmessung und des zweiten Intensitätsbeitragsfaktors.

5. Computerimplementiertes Verfahren nach Anspruch 4, ferner umfassend:
für jeden Detektionswinkelbin, Auswählen einer Vielzahl von Intensitätsmessungen, wobei jede Intensitätsmessung mit einem Winkelabtastbereich assoziiert ist, der dem Winkelbereich des zumindest einen Detektionswinkelbins zumindest teilweise entspricht, und wobei zumindest einige der Intensitätsmessungen zu verschiedenen Intensitätsmesssequenzen gehören;
Bestimmen, für jede Intensitätsmessung, eines Intensitätsbeitragsfaktors basierend auf dem Anteil des Winkelbereichs der ersten Intensitätsmessung, der mit dem Winkelbereich des zumindest einen Detektionswinkelbins überlappt; und
Bestimmen einer gebinnten Intensität durch Summieren der Produkte der Intensität assoziiert mit den jeweiligen Intensitätsmessungen und ihres jeweiligen Intensitätsbeitragsfaktors.

6. Computerimplementiertes Verfahren nach einem vorhergehenden Anspruch, wobei das Verfahren ferner Folgendes umfasst:
Empfangen von Röntgenanalysedaten von einer Röntgenanalysevorrichtung, die dazu konfiguriert ist, eine Probe in einem Einfallswinkel, ω, zu bestrahlen, und dazu konfiguriert ist, Röntgenstrahlen von der Probe in einem Winkel 2θ zu detektieren, wobei die Röntgenanalysedaten für jeden Detektionskanal eine Sequenz von Intensitätsmessungen umfassen, wobei die Intensitätsmessungen Intensität als eine Funktion der Winkelposition des Röntgendetektors angeben; und
für jeden anderen Detektionskanal als einem Referenzdetektionskanal, Anpassen des Winkelabtastbereichs basierend auf dem Winkelversatz zwischen dem Detektionskanal und dem Referenzdetektionskanal.

7. Computerimplementiertes Verfahren nach einem vorhergehenden Anspruch, ferner umfassend:
Erzeugen einer Röntgenanalyseabtastung, die gebinnte Intensität als eine Funktion des Detektionswinkels darstellt; und
Ausgeben der Röntgenanalyseabtastung.

8. Prozessor zum Verarbeiten von Röntgenanalysedaten von einem Röntgendetektor, der eine Vielzahl von Detektionskanälen umfasst, wobei der Prozessor zu Folgendem konfiguriert ist:
Empfangen von Röntgenanalysedaten von dem Röntgendetektor, der die Vielzahl von Detektionskanälen umfasst;
Gewinnen, für jeden Detektionskanal, einer Sequenz von Intensitätsmessungen, wobei die Sequenz von Intensitätsmessungen eine Intensitätswinkelabtastung über einen Winkelabtastbereich des Röntgendetektors bildet;
Definieren einer Detektionswinkelbingröße für eine Vielzahl von Detektionswinkelbins;
für jeden aus der Vielzahl von Detektionswinkelbins, Bestimmen, für jeden Detektionskanal, eines Intensitätsbeitragsfaktors für zumindest eine der Intensitätsmessungen; und
für jeden aus der Vielzahl von Detektionswinkelbins, Bestimmen einer gebinnten Intensität basierend auf der Intensität der zumindest einen Intensitätsmessung und ihrem entsprechenden Intensitätsbeitragsfaktor,
**dadurch gekennzeichnet, dass**:
der Prozessor ferner dazu konfiguriert ist, für jeden Detektionskanal einen Winkelversatz zu bestimmen;
die Röntgenanalysedaten Intensitätswinkelabtastdaten umfassen, die durch Messen der Röntgenintensität gewonnen werden, während der Röntgendetektor kontinuierlich durch den Winkelabtastbereich des Röntgendetektors abgetastet wird; und
der Intensitätsbeitragsfaktor gemäß einem Winkelbereich assoziiert mit dem Detektionswinkelbin und dem Winkelversatz des Detektionskanals bestimmt wird.

9. Prozessor nach Anspruch 8, ferner zu Folgendem konfiguriert:
Bestimmen eines Winkelabtastbereichs assoziiert mit jeder Intensitätsmessung, basierend auf dem Winkelversatz des jeweiligen Detektionskanals; und
für jeden aus der Vielzahl von Detektionswinkelbins, Auswählen von zumindest einer Intensitätsmessung assoziiert mit dem Detektionswinkelbin, wobei die Intensitätsmessung einem Winkelbereich entspricht, der zumindest teilweise mit dem Winkelbereich des Detektionswinkelbins überlappt.

10. Prozessor nach Anspruch 9, ferner zu Folgendem konfiguriert:
für einen ersten Detektionswinkelbin:
Auswählen, für zumindest eine Sequenz von Intensitätsmessungen, einer ersten Intensitätsmessung, die über einen Winkelabtastbereich gewonnen wird, der dem Winkelbereich des zumindest einen Detektionswinkelbins zumindest teilweise entspricht, und einer zweiten Intensitätsmessung, die Intensitätsdaten umfasst, die über einen Winkelbereich gewonnen werden, der dem Winkelbereich des zumindest einen Detektionswinkelbins zumindest teilweise entspricht;
Bestimmen eines ersten Intensitätsbeitragsfaktors basierend auf dem Anteil des Winkelbereichs der ersten Intensitätsmessung, der mit dem Winkelbereich des zumindest einen Detektionswinkelbins überlappt; und
Bestimmen eines zweiten Intensitätsbeitragsfaktors basierend auf dem Anteil des Winkelbereichs der zweiten Intensitätsmessung, der dem Winkelbereich des zumindest einen Detektionswinkelbins entspricht.

11. Prozessor nach Anspruch 10, ferner dazu konfiguriert, die gebinnte Intensität des ersten Detektionswinkelbins zu bestimmen, wobei das Bestimmen der gebinnten Intensität des ersten Detektionswinkelbins Folgendes umfasst:
Auswählen einer Vielzahl von Detektionskanalintensitätsmessungen, die einem ersten Detektionskanal entspricht;
Bestimmen, für eine vorangehende Detektionskanalintensitätsmessung der ausgewählten Detektionskanalintensitätsmessungen, des ersten Intensitätsbeitragsfaktors;
Bestimmen, für eine nachfolgende Detektionskanalintensitätsmessung der ausgewählten Detektionskanalintensitätsmessungen, des zweiten Intensitätsbeitragsfaktors; und
Summieren des Produkts der Intensität assoziiert mit der ersten Detektionskanalintensitätsmessung und des ersten Intensitätsbeitragsfaktors und des Produkts der Intensität assoziiert mit der zweiten Detektionskanalintensitätsmessung und des zweiten Intensitätsbeitragsfaktors.

12. Prozessor nach einem der Ansprüche 9 bis 11, wobei der Prozessor ferner zu Folgendem konfiguriert ist:
für jeden Detektionswinkelbin, Auswählen einer Vielzahl von Intensitätsmessungen, wobei jede Intensitätsmessung mit einem Winkelabtastbereich assoziiert ist, der dem Winkelbereich des zumindest einen Detektionswinkelbins zumindest teilweise entspricht, und wobei zumindest einige der Intensitätsmessungen zu verschiedenen Intensitätsmesssequenzen gehören;
Bestimmen, für jede Intensitätsmessung, eines Intensitätsbeitragsfaktors basierend auf dem Anteil des Winkelbereichs der ersten Intensitätsmessung, der mit dem Winkelbereich des zumindest einen Detektionswinkelbins überlappt; und
Bestimmen einer gebinnten Intensität durch Summieren der Produkte der Intensität assoziiert mit den jeweiligen Intensitätsmessungen und ihres jeweiligen Intensitätsbeitragsfaktors.

13. Prozessor nach einem der Ansprüche 8 bis 12, wobei der Prozessor zu Folgendem konfiguriert ist:
Empfangen von Röntgenanalysedaten von einer Röntgenanalysevorrichtung, die dazu konfiguriert ist, eine Probe in einem Einfallswinkel, ω, zu bestrahlen, und dazu konfiguriert ist, Röntgenstrahlen von der Probe in einem Winkel 2θ zu detektieren, wobei die Röntgenanalysedaten für jeden Detektionskanal eine Sequenz von Intensitätsmessungen umfassen, wobei die Intensitätsmessungen Intensität als eine Funktion der Winkelposition des Röntgendetektors angeben; und
für jeden anderen Detektionskanal als einem Referenzdetektionskanal, Anpassen des Winkelabtastbereichs basierend auf dem Winkelversatz zwischen dem Detektionskanal und dem Referenzdetektionskanal.

14. Röntgenanalysevorrichtung zum Analysieren von Materialien, wobei die Röntgenanalysevorrichtung Folgendes umfasst:
eine Röntgenquelle (601);
einen Röntgendetektor (605), der ein Array von Detektionskanälen umfasst; und
den Prozessor (610) nach einem der Ansprüche 8 bis 13.

15. Computerprogrammprodukt, umfassend Anweisungen, die, wenn das Programm durch einen Computer ausgeführt wird, bewirken, dass der Computer die Schritte nach einem der Ansprüche 1-7 durchführt.

## Revendications

1. Procédé d'analyse de rayons X mis en œuvre par ordinateur comprenant :
la réception de données d'analyse de rayons X (201), en provenance d'un détecteur de rayons X (10) comprenant une pluralité de canaux de détection (1, 2, 3, 4, 5) ;
l'obtention (203), pour chaque canal de détection, d'une séquence de mesures d'intensité, ladite séquence de mesures d'intensité formant un balayage angulaire d'intensité sur la plage de balayage angulaire du détecteur de rayons X ;
la détermination (205) d'une taille de compartiment d'angles de détection pour une pluralité de compartiments d'angles de détection ;
pour chacun de la pluralité de compartiments d'angles de détection, la détermination (209), pour chaque canal de détection, d'un facteur de contribution d'intensité pour au moins l'une des mesures d'intensité ; et
pour chacun de la pluralité de compartiments d'angles de détection, la détermination (211) d'une intensité compartimentée sur la base de l'intensité de ladite au moins une mesure d'intensité et de son facteur de contribution d'intensité correspondant,
**caractérisé en ce que** :
les données d'analyse de rayons X comprennent des données de balayage angulaire d'intensité obtenues en mesurant l'intensité des rayons X tout en balayant en continu le détecteur de rayons X à travers la plage de balayage angulaire du détecteur de rayons X ;
le procédé comprenant en outre la détermination (207), pour chaque canal de détection, d'un décalage angulaire ; et
ledit facteur de contribution d'intensité étant déterminé en fonction d'une plage angulaire associée au compartiment d'angles de détection et au décalage angulaire du canal de détection.

2. Procédé mis en œuvre par ordinateur selon la revendication 1, ledit procédé comprenant :
pour chacun de la pluralité de compartiments d'angles de détection, la sélection d'au moins une mesure d'intensité associée au compartiment d'angles de détection sur la base d'une plage de balayage angulaire associée à la mesure d'intensité et d'une plage angulaire associée au compartiment d'angles de détection, ladite mesure d'intensité correspondant à une plage angulaire chevauchant au moins partiellement la plage angulaire du compartiment d'angles de détection.

3. Procédé mis en œuvre par ordinateur selon la revendication 2, comprenant en outre :
pour un premier compartiment d'angles de détection :
la sélection, pour au moins une séquence de mesures d'intensité, d'une première mesure d'intensité obtenue sur une plage de balayage angulaire correspondant au moins partiellement à la plage angulaire dudit au moins un compartiment d'angles de détection et d'une seconde mesure d'intensité comprenant des données d'intensité obtenues sur une plage angulaire correspondant au moins partiellement à la plage angulaire dudit au moins un compartiment d'angles de détection ;
la détermination d'un premier facteur de contribution d'intensité sur la base de la proportion de la plage angulaire de la première mesure d'intensité qui chevauche la plage angulaire dudit au moins un compartiment d'angles de détection ; et
la détermination d'un second facteur de contribution d'intensité sur la base de la proportion de la plage angulaire de la seconde mesure d'intensité correspondant à la plage angulaire dudit au moins un compartiment d'angles de détection.

4. Procédé mis en œuvre par ordinateur selon la revendication 3, comprenant en outre la détermination de l'intensité compartimentée du premier compartiment d'angles de détection, ladite détermination de l'intensité compartimentée du premier compartiment d'angles de détection comprenant :
la sélection d'une pluralité de mesures d'intensité de canal de détection correspondant à un premier canal de détection ;
la détermination, pour une mesure d'intensité de canal de détection précédente des mesures d'intensité de canal de détection sélectionnées, du premier facteur de contribution d'intensité ;
la détermination, pour une mesure d'intensité de canal de détection suivante des mesures d'intensité de canal de détection sélectionnées, du second facteur de contribution d'intensité ; et
l'addition du produit de l'intensité associée à la première mesure d'intensité de canal de détection et du premier facteur de contribution d'intensité et du produit de l'intensité associée à la seconde mesure d'intensité de canal de détection et du second facteur de contribution d'intensité.

5. Procédé mis en œuvre par ordinateur selon la revendication 4, comprenant en outre :
pour chaque compartiment d'angles de détection, la sélection d'une pluralité de mesures d'intensité, chaque mesure d'intensité étant associée au moins partiellement à une plage de balayage angulaire correspondant à la plage angulaire dudit au moins un compartiment d'angles de détection, et au moins certaines des mesures d'intensité appartenant à des séquences de mesures d'intensité différentes ;
la détermination, pour chaque mesure d'intensité, d'un facteur de contribution d'intensité sur la base de la proportion de la plage angulaire de la première mesure d'intensité qui chevauche la plage angulaire dudit au moins un compartiment d'angles de détection ; et
la détermination d'une intensité compartimentée en additionnant les produits de l'intensité associée aux mesures d'intensité respectives et son facteur de contribution d'intensité respectif.

6. Procédé mis en œuvre par ordinateur selon l'une quelconque des revendications précédentes, le procédé comprenant en outre :
la réception de données d'analyse de rayons X en provenance d'un appareil d'analyse de rayons X conçu pour irradier un échantillon suivant un angle incident, ω, et conçu pour détecter des rayons X à partir de l'échantillon suivant un angle 2θ, lesdites données d'analyse de rayons X comprenant, pour chaque canal de détection, une séquence de mesures d'intensité, les mesures d'intensité indiquant l'intensité en fonction de la position angulaire du détecteur de rayons X ; et
pour chaque canal de détection autre qu'un canal de détection de référence, l'ajustement de la plage de balayage angulaire, sur la base du décalage angulaire entre le canal de détection et le canal de détection de référence.

7. Procédé mis en œuvre par ordinateur selon l'une quelconque des revendications précédentes, comprenant en outre :
la génération d'un balayage d'analyse de rayons X représentant l'intensité compartimentée en fonction de l'angle de détection ; et
l'émission du balayage d'analyse de rayons X.

8. Processeur permettant de traiter les données d'analyse de rayons X en provenance d'un détecteur de rayons X comprenant une pluralité de canaux de détection, le processeur étant configuré pour :
recevoir des données d'analyse de rayons X en provenance du détecteur de rayons X comprenant la pluralité de canaux de détection ;
obtenir, pour chaque canal de détection, une séquence de mesures d'intensité, ladite séquence de mesures d'intensité formant un balayage angulaire d'intensité sur une plage de balayage angulaire du détecteur de rayons X ;
déterminer une taille de compartiment d'angles de détection pour une pluralité de compartiments d'angles de détection ;
pour chacun de la pluralité de compartiments d'angles de détection, déterminer, pour chaque canal de détection, un facteur de contribution d'intensité pour au moins l'une des mesures d'intensité ; et
pour chacune de la pluralité de compartiments d'angles de détection, déterminer une intensité compartimentée sur la base de l'intensité de ladite au moins une mesure d'intensité et de son facteur de contribution d'intensité correspondant,
**caractérisé en ce que** :
le processeur est en outre configuré pour déterminer, pour chaque canal de détection, un décalage angulaire ;
les données d'analyse de rayons X comprennent des données de balayage angulaire d'intensité obtenues en mesurant l'intensité des rayons X tout en balayant en continu le détecteur de rayons X à travers la plage de balayage angulaire du détecteur de rayons X ; et
le facteur de contribution d'intensité est déterminé en fonction d'une plage angulaire associée au compartiment d'angles de détection et au décalage angulaire du canal de détection.

9. Processeur selon la revendication 8, configuré en outre pour :
déterminer une plage de balayage angulaire associée à chaque mesure d'intensité, sur la base du décalage angulaire du canal de détection respectif ; et
pour chacune de la pluralité de compartiments d'angles de détection, sélectionner au moins une mesure d'intensité associée au compartiment d'angles de détection, ladite mesure d'intensité correspondant à une plage angulaire chevauchant au moins partiellement la plage angulaire du compartiment d'angles de détection.

10. Processeur selon la revendication 9, configuré en outre pour :
pour un premier compartiment d'angles de détection :
sélectionner, pour au moins une séquence de mesures d'intensité, une première mesure d'intensité obtenue sur une plage de balayage angulaire correspondant au moins partiellement à la plage angulaire dudit au moins un compartiment d'angles de détection et une seconde mesure d'intensité comprenant des données d'intensité obtenues sur une plage angulaire correspondant au moins partiellement à la plage angulaire dudit au moins un compartiment d'angles de détection ;
déterminer un premier facteur de contribution d'intensité sur la base de la proportion de la plage angulaire de la première mesure d'intensité qui chevauche la plage angulaire dudit au moins un compartiment d'angles de détection ; et
déterminer un second facteur de contribution d'intensité sur la base de la proportion de la plage angulaire de la seconde mesure d'intensité correspondant à la plage angulaire dudit au moins un compartiment d'angles de détection.

11. Processeur selon la revendication 10, configuré en outre pour déterminer l'intensité compartimentée du premier compartiment d'angles de détection, ladite détermination de l'intensité compartimentée du premier compartiment d'angles de détection comprenant :
la sélection d'une pluralité de mesures d'intensité de canal de détection correspondant à un premier canal de détection ;
la détermination, pour une mesure d'intensité de canal de détection précédente des mesures d'intensité de canal de détection sélectionnées, du premier facteur de contribution d'intensité ;
la détermination, pour une mesure d'intensité de canal de détection suivante des mesures d'intensité de canal de détection sélectionnées, du second facteur de contribution d'intensité ; et
l'addition du produit de l'intensité associée à la première mesure d'intensité de canal de détection et du premier facteur de contribution d'intensité et du produit de l'intensité associée à la seconde mesure d'intensité de canal de détection et du second facteur de contribution d'intensité.

12. Processeur selon l'une quelconque des revendications 9 à 11, ledit processeur étant configuré en outre pour :
pour chaque compartiment d'angles de détection, sélectionner une pluralité de mesures d'intensité, chaque mesure d'intensité étant associée au moins partiellement à une plage de balayage angulaire correspondant à la plage angulaire dudit au moins un compartiment d'angles de détection, et au moins certaines des mesures d'intensité appartenant à des séquences de mesures d'intensité différentes ;
déterminer, pour chaque mesure d'intensité, un facteur de contribution d'intensité sur la base de la proportion de la plage angulaire de la première mesure d'intensité qui chevauche la plage angulaire dudit au moins un compartiment d'angles de détection ; et
déterminer une intensité compartimentée en additionnant les produits de l'intensité associée aux mesures d'intensité respectives et son facteur de contribution d'intensité respectif.

13. Processeur selon l'une quelconque des revendications 8 à 12, ledit processeur étant configuré pour :
recevoir des données d'analyse de rayons X en provenance d'un appareil d'analyse de rayons X conçu pour irradier un échantillon suivant un angle incident, ω, et conçu pour détecter des rayons X à partir de l'échantillon suivant un angle 2θ, lesdites données d'analyse de rayons X comprenant, pour chaque canal de détection, une séquence de mesures d'intensité, les mesures d'intensité indiquant l'intensité en fonction de la position angulaire du détecteur de rayons X ; et
pour chaque canal de détection autre qu'un canal de détection de référence, ajuster la plage de balayage angulaire, sur la base du décalage angulaire entre le canal de détection et le canal de détection de référence.

14. Appareil d'analyse de rayons X pour analyser des matériaux, l'appareil d'analyse de rayons X comprenant :
une source de rayons X (601) ;
un détecteur de rayons X (605) comprenant un réseau de canaux de détection ; et
le processeur (610) selon l'une quelconque des revendications 8 à 13.

15. Produit de programme informatique comprenant des instructions qui, lorsque le programme est exécuté par un ordinateur, amènent l'ordinateur à effectuer les étapes selon l'une quelconque des revendications 1 à 7.
